# NEUE EUROPÄISCHE PATENTSCHRIFT

(11) **EP 1 342 599 B2**
(45) Veröffentlichungstag und Bekanntmachung des Hinweises auf die Entscheidung über den Einspruch: **24.02.2010**
(45) Hinweis auf die Patenterteilung: 12.04.2006
(21) Anmeldenummer: 03076423.7
(22) Anmeldetag: 14.04.2000
(51) Int. Cl.: B60J 7/12

(54) **Hydraulische Bedienungseinrichtung für eine Verdeckeinheit eines Fahrzeugs**
Hydraulic control system for a soft top unit of a vehicle
Système de contrôle hydraulique pour capote flexible de véhicule

(30) Priorität: 21.04.1999 NL 1011852
(43) Veröffentlichungstag der Anmeldung: 10.09.2003
(62) Teilanmeldung aus: 00201362.1
(73) Patentinhaber: Actuant Corporation, Glendale, Wisconsin 53209-3703 (US)
(72) Erfinder: Mentink, Laurentius Andreas Gerardus, 7483 AC Haaksbergen (NL)
(74) Vertreter: Houben, Christiaan Hein Willem Frans

(56) Entgegenhaltungen:
- EP-A- 0 693 390
- EP-A- 0 842 803
- EP-A1- 0 842 803
- EP-A1- 0 893 605
- AT-B- 405 750
- DE-A1- 4 037 824
- US-A- 5 188 015

## Beschreibung

Die vorliegende Erfindung bezieht sich auf eine hydraulische Bedienungseinrichtung für eine Verdeckeinheit eines Fahrzeugs, gemäß Oberbegriff des Anspruchs 1. Eine solche Einrichtung ist in EP 0 842 803 A offenbart.

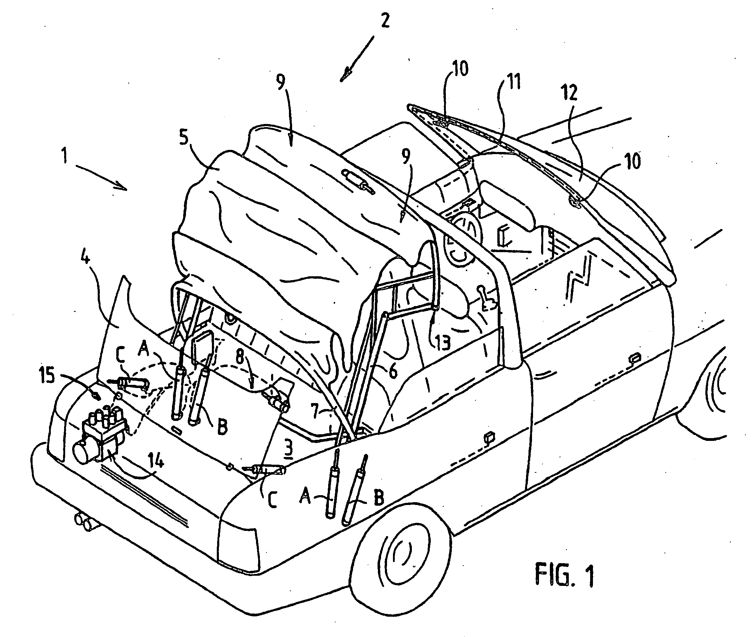

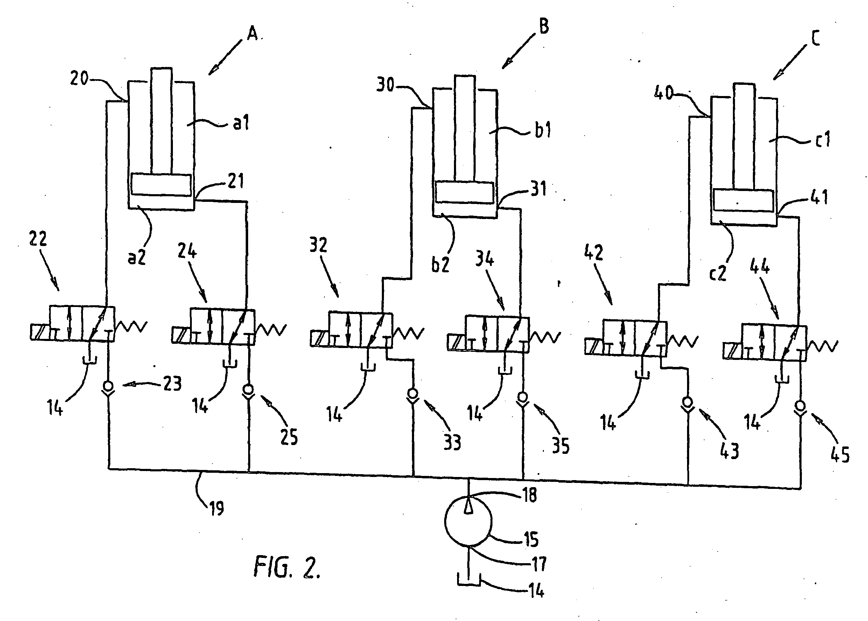

In Figur 1 der vorliegenden Anmeldung ist ein Fahrzeug mit einer allgemein bekannten Ausführung einer hydraulisch betätigbaren Verdeckeinheit gezeigt. In Figur 2 ist in der Form eines hydraulischen Schemas eine allgemein bekannte Ausführung einer hydraulischen Bedienungseinrichtung gezeigt, die dazu geeignet ist, die Verdeckeinheit zu betätigen.

Der Nachteil der in Figur 2 gezeigten Bedienungseinrichtung ist die Vielzahl von elektrisch betätigbaren Zweipositionenventilen, nämlich zwei Ventile pro anzusteuerndes Aktuatorpaar. Derartige Ventile sind kostspielige Teile und deshalb ist es bekannt, eine Reduzierung der Anzahl Ventile anzustreben. Weiter hat die Anzahl Ventile Einfluß auf die elektrischen Steuermittel für die Ventile. So sind unerwünscht viele elektrische Kabel zu den Ventilen notwendig.

Es ist bei hydraulischen Bedienungseinrichtungen für Verdeckeinheiten bekannt, eine "Haltefunktion" vorzusehen, das heißt, die Möglichkeit zu schaffen, den Bewegungsablauf der Verdeckeinheit an jedem beliebigen Moment (zeitweilig) einzustellen, wobei dann die Aktuatore dadurch hydraulisch in ihrem Stand gehalten werden, daß keine hydraulische Flüssigkeit aus den Aktuatoren ausströmen kann.

Zugleich ist allgemein bekannt, eine "Notbedienungsfunktion" vorzusehen, das heißt, die Möglichkeit, bei einer Störung die Verdeckeinheit manuell, wenn möglich sowohl in den geöffneten, als auch in den geschlossenen Stand, zu bewegen. Insbesondere ist die Notbedienungsfunktion bei einer elektrischen Störung relevant, wodurch die elektrisch angetriebene Pumpe und/oder elektrisch betätigten Ventile nicht mehr funktionieren.

Die in der Figur 2 gezeigte hydraulische Bedienungseinrichtung schafft sowohl die erwähnte "Haltefunktion", nämlich wenn alle Ventile elektrisch betätigt bleiben, als auch die "Notbedienungsfunktion", nämlich wenn alle Ventile nicht länger betätigt sind, aber kennt, wie gesagt, den Nachteil einer unerwünscht großen Anzahl kostbarer elektrisch betätigbarer Ventile.

Um die Anzahl Ventile zu reduzieren, ist eine andere bekannte Maßnahme, einen oder mehrere der Aktuatore "regenerativ" zu betreiben, was auch als ein "differentielles" Betreiben bekannt ist. Bei dem normalen Betreiben eines doppeltwirkenden Aktuators wird die eine Arbeitskammer mit dem Ausströmanschluß der Pumpe und die andere Arbeitskammer mit dem Behälter verbunden. Bei dem regenerativen Betreiben eines doppeltwirkenden hydraulischen Aktuators werden in eine Verlagerungsrichtung der Kolbenstange beide Arbeitskammern mit dem Ausströmanschluß der Pumpe verbunden. Auf Basis des Unterschieds in der wirksamen Oberfläche des Kolbens an der Seite der Kolbenstange und der anderen Seite des Kolbens, wird die Kolbenstange dann ausgeschoben. In dieser Situation kann die Kolbenstange auch ausgeschoben gehalten werden. Zum Wiedereinschieben wird die kolbenstangenseitige Arbeitskammer mit dem Ausströmanschluß, und die andere Arbeitskammer mit dem Behälter verbunden. Diese Lösung ermöglicht es, gegenüber dem Schema der Figur 2 bei jedem Aktuator ein betätigbares Zweipositionenventil einzusparen, indem die kolbenstangenseitige Arbeitskammer direkt mit dem Ausströmanschluß der Pumpe, ohne Intervention eines betätigbaren Ventils verbunden wird. Diese Lösung hat aber wohl zur Folge, daß die Kraft, die der Aktuator beim Ausschieben der Kolbenstange liefern kann, geringer als bei der Lösung gemäß Figur 2 ist. Aus diesem Grund is die Lösung insbesondere für die Teile der Klappverdeckeinheit geeignet, die nur eine begrenzte Antriebskraft erfordern. Insbesondere betrifft dies die etwaigen hydraulisch betätigten Verriegelungen, den Deckel zum Abschließen eines Unterbringungsraums des Fahrzeugs, in dem das geöffnete Klappverdeck untergebracht wird (bekannt als Tonneau-Cover), und den Hinter- oder Stoffspannbügel eines aus einem Stoff hergestellten Verdecks.

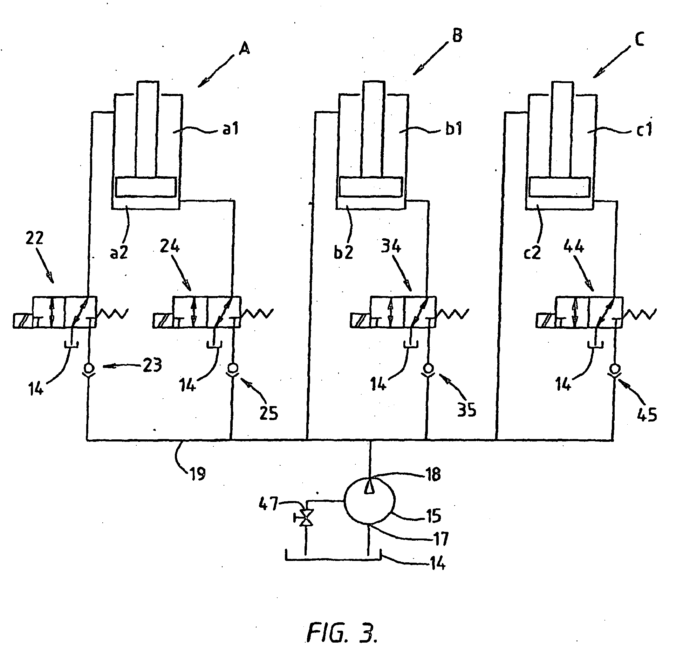

In Figur 3 ist in der Form eines hydraulischen Schemas ein Ausführungsbeispiel einer hydraulischen Bedienungseinrichtung für eine Klappverdeckeinheit eines Fahrzeugs gezeigt, in der die mit einer geringen Kraft beweglichen Teile von regenerativ betriebenen hydraulischen Aktuatoren angetrieben werden. Ein wichtiger Nachteil dieser Lösung ist aber das nunmehr notwendige, von dem Fahrer zu aktivierende, in diesem Beispiel manuell zu betätigende, Notbedienungsventil. Dieses Notbedienungsventil ist hier notwendig, weil aus den kolbenstangenseitigen Arbeitskammern des Stoffspannbügelaktuators und des Deckelaktuators beim Ausfallen einer elektrischen Erregung der elektrisch betätigbaren Zweipositionenventile keine Flüssigkeit zu dem Behälter abfließen kann. Insbesondere ist keine Strömung durch die Pumpe von dem Ausströmanschluß zu dem Sauganschluß möglich. Es zeigt sich, daß es schwierig oder unmöglich ist, das manuell zu betätigende Notbedienungsventil an einer leicht zu erreichenden Stelle in dem Fahrzeug anzuordnen. Aus diesem Grund und weil verschiedene Fahrzeughersteller nicht möchten, daß der Fahrer in einer Störungssituation eine Handlung ausführen muß, um die Notbedienungsmöglichkeit zu schaffen, und schon gar nicht, daß der Fahrer manuell ein Ventil betätigen muß, ist es bekannt, der Überflüssigkeit eines derartigen Notbedienungsventil anzustreben, und die Notbedienungseinrichtung in solcher Weise auszuführen, daß die Notbedienungsmöglichkeit automatisch, also ohne Eingreifen des Fahrers, geschaffen wird.

Weiter is bereits bekannt, das Notbedienungsventil als ein normal geöffnetes elektrisch betätigbares Ventil auszuführen in einer Verbindung zwischen der/den Arbeitskammer (n) des Aktuators, bzw. der Aktuatore und dem Behälter, die während des Betreibens der Verdeckeinheit elektrisch betätigt und also geschlossen wird. Ein derartiges Ventil ist jedoch kostspielig und erfordert eine zusätzliche elektronische Ansteuerung.

Der vorliegenden Erfindung liegt die Aufgabe zugrunde, Maßnahmen vorzuschlagen, die es dem Fachmann ermöglichen, eine hydraulische Bedienungseinrichtung für eine Verdeckeinheit eines Fahrzeugs zu entwickeln, wobei die Notbedienungsfunktion in automatischer Weise realisiert wird.

Die Erfindung schafft hierzu eine hydraulische Bedienungseinrichtung gemäß Anspruch 1.

Die vorliegende Erfindung schafft weiter eine Einrichtung gemäß Oberbegriff des Anspruchs 4, wobei in dem an den Ausströmanschluß anschließenden Kanal ein in Richtung auf den Ausströmanschluß schließenden erstes Rückschlagventil angeordnet ist, und daß an der von dem Ausströmanschluß abgewandten Seite dieses ersten Rückschlagventils, der Kanal über eine erste Zweigleiung mit dem Behälter verbunden ist, in dem ein zweites Rückschlagventil, das in Richtung auf den Behälter schließt, angeordnet ist, und daß an der von dem Ausströmanschluß abgewandten Seite des ersten Rückschlagventils, der Kanal über eine zweite Zweigleitung mit dem Behälter verbunden ist, in dem ein hydraulisch schließendes Rückschlagventil angeordnet ist, das in der von dem Behälter abgewandten Richtung schließt, wenn die Pumpe in Betrieb ist.

Der Erfindungsgedanke und vorteilhafte Ausbildungen der erfindungsgemäßen hydraulischen Bedienungseinrichtungen sind in den Ansprüchen und der nachfolgenden Beschreibung anhand der Zeichnung beispielhaft beschrieben. Es zeigt:
- Fig. 1: eine perspektivische Ansicht eines Fahrzeugs des Kabriolettyps, bei dem das Klappverdeck teilweise geöffnet ist, und bei dem die hydraulischen Aktuatore der Bedienungseinrichtung schematisch angedeutet sind,
- Fig. 2: ein hydraulisches Schema einer allgemein bekannten Ausbildung einer hydraulischen Bedienungseinrichtung für eine Verdeckeinheit,
- Fig. 3: ein hydraulisches Schema einer anderen Ausbildung einer hydraulischen Bedienungseinrichtung für eine Verdeckeinheit,
- Fig. 4: ein hydraulisches Schema einer Bedienungseinrichtung für eine Verdeckeinheit eines Fahrzeugs gemäß Anspruch 1,
- Fig. 5: einen Teil des hydraulischen Schemas einer Bedienungseinrichtung für eine Verdeckeinheit eines Fahrzeugs gemäß Anspruch 2, und
- Fig. 6: das hydraulische Symbol für das von hydraulischem Steuerdruck zu schließende Rückschlagventil der Figur 5.

Figur 1 zeigt ein Fahrzeug des Kabriolettyps mit in diesem eine Karosserie und Passagiersteil 2. Das Fahrzeug 1 weist eine Verdeckeinheit auf, die aus einem Klappverdeck zum Überdecken des Passagiersteils 2 und einer hydraulischen Bedienungseinrichtung zum Bewegen des Klappverdecks zwischen einem geschlossenen Stand, in dem das Klappverdeck das Passagiersteil 2 des Fahrzeugs 1 überdeckt, und einem geöffneten Stand, in dem das Passagiersteil 2 nicht überdeckt is.

Hinter dem Passagiersteil 2 hat die Karosserie des Fahrzeugs 1 einen Unterbringungsraum 3, in dem das Klappverdeck in dem geöffneten Stand untergebracht werden kann und weiter einen hinauf- und herunterschwenkbaren Deckel 4 zum Abschließen des Unterbringungsraums 3.

Das Klappverdeck hat einen faltbaren Bezug 5 und einen zusammenlegbaren Rahmen für den Bezug 5. Der Rahmen umfaßt unter anderem einen Hauptbügel 6, der durch die Bedienungseinrichtung zwischen einem hinaufgeschwenkten und einen heruntergeschwenkten Stand beweglich ist, und einen schwenkbaren Hinterbügel 7 zum Bewegen des hinteren Teils des Bezuges 5 des Klappverdecks. Der Hinterbügel 7 ist durch die Bedienungseinrichtung zwischen einem hinafgeschwenkten Stand, in dem der Hinterbügel 7 mehr oder weniger neben dem hinaufgeschwenkten Hauptbügel 6 liegt, wie ersichtlich in Figur 1, und einem heruntergeschwenkten Stand, beweglich.

Zum Verriegeln des Deckels 4 in den den Unterbringungsraum 3 abschließenden Stand ist bei 8 eine mechanische Deckelverriegelung (nicht dargestellt) vorgesehen.

Um das Klappverdeck in dem geschlossenen Stand zu verriegeln, sind an der vorderen Klappverdeckkante zwei Verriegelungen bei 9 vorgesehen, die mit Rastaussparungen 10 im Rahmen 11 über der Windschutzscheibe 12 des Fahrzeugs 1 zusammenwirken können.

Das dargestellte Klappverdeck ist eines bekannten Typs, dessen an die vordere Klappverdeckkante grenzende Teil des Klappverdecks um Scheitellinie 13 gegenüber dem dahinter liegenden Teil des Klappverdecks hinaufschwenken kann. Diese Schwenkung des vorderen Teils wird von einer mechanischen Kupplung zwischen diesem vorderen Teil und dem von dem Hinterbügel 7 bewegten hinteren Teil des Klappverdecks bewirkt.

Die hydraulische Bedienungseinrichtung umfaßt mehrere hydraulische Aktuatore, worunter ein Paar Hauptbügelaktuatore A zum Schwenken des Hauptbügels 6, ein Paar Hinterbügelaktuatore B zum Schwenken des Hinterbügels 7 und ein Paar Deckelaktuatore C zum Bewegen des Deckels 4, vorgesehen sind.

Die Hauptbügelaktuatore A, die Hinterbügelaktuatore B und die Deckelaktuatore C sind lineare kolben-Zylinder-Einrichtungen des doppeltwirkenden Typs mit je einer ersten Arbeitskammer und einer zweiten Arbeitskammer, die durch einen Kolben des betreffenden Aktuators voneinander getrennt sind, beziehungsweise mit a1,a2, b1,b2, c1,c2 angegeben. Die Aktuatore eines jeden Paares sind in bekannter Weise parallel angeschlossen, so daß der Einfachkeit halber in der Beschreibung fortan jeweils nur ein einziger Aktuator eines jeden Paares angedeutet ist.

Die hydraulische Bedienungseinrichtung umfaßt weiter einen Behälter 14 für hydraulische Flüssigkeit und eine Pumpe 15.

In Figur 2 ist eine bekannte hydraulische Bedienungseinrichtung für eine Klappverdeckeinheit eines Fahrzeugs dargestellt, mit in dieser die bereits in Figur 1 gezeigten Aktuatore A, und zwar ein Paar Hauptaktuatore zum Schwenken des Hauptbügels 6, ein Paar Hinterbügelaktuatore B zum Schwenken des Hinterbügels 7 und ein Paar Deckelaktuatore C zum Bewegen des Deckels 4. Die Aktuatore eines jeden Paares sind in bekannter Weise parallel angeschlossen, so daß der Einfachkeit halber in Figur 2 und in der Beschreibung fortan jeweils nur ein einziger Aktuator eines jeden Paares angedeutet ist.

Die Hauptbügelaktuatore A, die Hinterbügelaktuatore B, und die Deckelaktuatore C sind lineare kolben-Zylinder-Einrichtungen des doppeltwirkenden Typs met je einer ersten Arbeitskammer und einer zweiten Arbeitskammer, die durch einen Kolben des betreffenden Aktuators voneinander getrennt sind, beziehungsweise mit a1,a2, b1, b2, c1, c2 angedeutet.

Die Pumpe 15 weist einen Sauganschluß 17 und einen Ausströmanschluß 18 auf, und hat eine einzige Pumprichtung, das heißt, die Pumpe 15 kann nur Flüssigkeit von dem Sauganschluß 17 zu dem Ausströmanschluß 18 pumpen. Der Sauganschluß 17 ist mit dem Behälter 14 verbunden. Weiter ist die Pumpe 15 einer solchen Ausführung, daß keine Strömung durch die Pumpe 15 von dem Ausströmanschlusses 18 zum Sauganschluß 17 und so zum Behälter 14 möglich ist. Dies kann zum Beispiel eine Radialkolbenpumpe sein. Vorzugsweise wird die Pumpe 15 von einem nicht dargestellten Elektromotor angetrieben.

Der Ausströmanschluß 18 der Pumpe 15 schließt an eine gemeinsame Leitung 19 an, welche Leitung 19 mit jedem der Aktuatore A,B und C verbunden ist.

Der Aktuator A hat einen zu der Kammer a1 gehörenden Anschluß 20 und einen zu der Kammer a2 gehörenden Anschluß 21.

Der Aktuator B hat einen zu der Kammer b1 gehörenden Anschluß 30 und einen zu der Kammer b2 gehörenden Anschluß 31.

In Figur 2 befindet sich zwischen jedem der Anschlüsse eines Aktuators und der Leitung 19 eine Leitung, mit in dieser ab dem Anschluß zu der Leitung 19 ein betätigbares Zweipositionenventil, das in seinem ersten Stand die Arbeitskammer mit dem Behälter 14, und in seinem zweiten Stand mit der Leitung 19 verbindet, und ein in Richtung auf die Leitung 19 abschließendes Rückschlagventil. Das Ventil ist ein elektromagnetisch betätigtes 3/2-Kugelsitzventil mit Federrückstellung zu dem ersten Stand.

Die Wirkung der in Figur 2 gezeigten Einrichtung ist allgemein bekannt und zum Teil bereits im Obenstehenden erläutert.

Insbesondere wird bemerkt, daß die Rückschlagventile 23, 25, 33, 35, 43, 45 vorgesehen sind, um die Aktuatore A,B,C, in beide Richtungen ihrer Kolbenstange hydraulisch festhalten zu können, wenn der Bewegungsablauf der Klappverdeckeinheit unterbrochen wird. In diesem Fall werden alle Zweipositionenventile betätigt, während die Pumpe 15 ausgeschaltet wird. Wenn bei einem bestimmten Aktuator die Haltefunktion in eine oder beide Richtungen der Kolbenstange nicht benötigt ist, kann das zugehörige Rückschlagventil entfallen.

In Figur 3 sind die der Figur 2 entsprechenden Teile mit den gleichen Bezugszeichen versehen, und ihre Wirkung wird nachstehend nicht weiter erläutert werden. Ein wichtiger Unterschied mit Figur 2 besteht darin, daß die erste Arbeitskammer b1 des Hinterbügelaktuators B und die erste Arbeitskammer c1 des Deckelaktuators C direkt, über eine feste Leitung ohne Ventile, mit der Leitung 19 und somit mit dem Ausströmanschluß 18 der Pumpe 15 verbunden sind. Hierdurch werden diese Aktuatore B und C regenerativ betrieben. Zum Ausschieben der Kolbenstange dieser Aktuatore B und C wird das zugehörige betätigbare Ventil 34, 44 betätigt, so daß sowohl die erste, als auch die zweite Arbeitskammer b1,b2 und c1,c2 unter hydraulischen Druck kommen. Durch den Unterschied in wirksamer Oberfäche an beiden Seiten des Kolbens dieser Aktuatore B und C wird die Kolbenstange dann ausschieben, und wenn das zugehörige Ventile betätigt bleibt, mit Kraft ausgeschoben gehalten werden. Zum Einschieben der Kolbenstange der Aktuatore B und C wird das zugehörige Ventil in den ersten Stand gebracht, so daß die zweite Arbeitskammer b2, c2 mit dem Behälter 14 verbunden wird, während über die Pumpe 15 hydraulische Flüssigkeit der ersten Arbeitskammer b1, c1 zugeführt wird.

Im Falle einer elektrischen Störung sind alle betätigbaren Ventile 22, 24, 34, 44 unbetätigt und kann somit über diese Ventile Flüssigkeit zu dem Behälter 14 strömen. Die ersten Arbeitskammern b1 und c1 stehen aber direkt mit der Pumpe 15 in Verbindung, und aus diesen Kammern b1 und c1 könnte somit keine Flüssigkeit ausströmen. Dies würde die Möglichkeiten, die Verdeckeinheit manuell zu betätigen, um das Klappverdeck entweder zu öffnen, oder zu schließen, erheblich begrenzen. Aus diesem Grund ist ein manuell betätigbares Notventil 47 vorgesehen, das geöffnet werden kann, um so die Leitung 19 und damit die Arbeitskammern b1 und c1 mit dem Behälter zu verbinden.

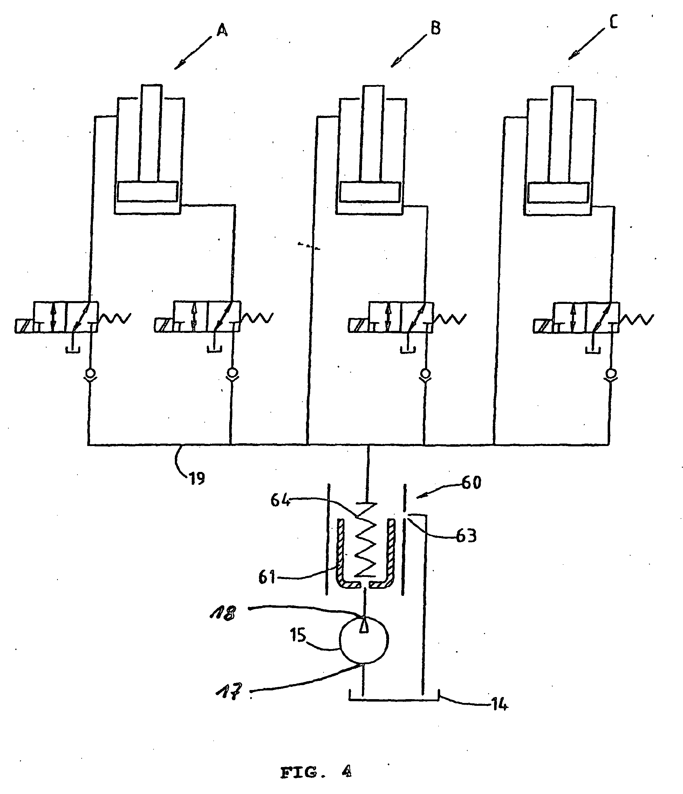

Anhand der Figur 4 wird nachfolgend eine Bedienungseinrichtung für eine Verdeckeinheit nach der Erfindung näher erläutert werden.

Figur 4 zeigt eine Möglichkeit, das manuell zu betätigende Notventil 47 des Schemas in Figur 3 entfallen zu lassen, und in automatischer Weise die Umschaltung auf die Notbedienung zu ermöglichen. Hierzu ist in der Leitung 19 des Ausströmanschlusses 18 der Pumpe 15 zu den Aktuatoren A,B und C ein von Strömung betätigtes Ventil 60 angeordnet. Das Ventil 60 hat einen Schiebekörper 61 mit einer Öffnung, welcher Schiebekörper 61 in eine Bohrung in dem Gehäuse verschieblich ist. An diese Bohrung schließt ein Auslaß 63 zu dem Behälter an. Wenn die Pumpe 15 in Betrieb ist, strömt die Flüssigkeit durch den Schiebekörper 61 und mittels der Antriebskraft wird der Schiebekörper 61 gegen die Kraft einer leichten Rückstellfeder 64 über den Auslaß 63 geschoben, so daß die Verbindung zum Behälter 14 abgeschlossen ist. Wenn die Pumpe 15 stillsteht, drückt die Feder 64 den Schiebekörper 61 wieder zurück, und kommt die Verbindung zwischen der Leitung 19 und dem Behälter 19 automatisch zustande.

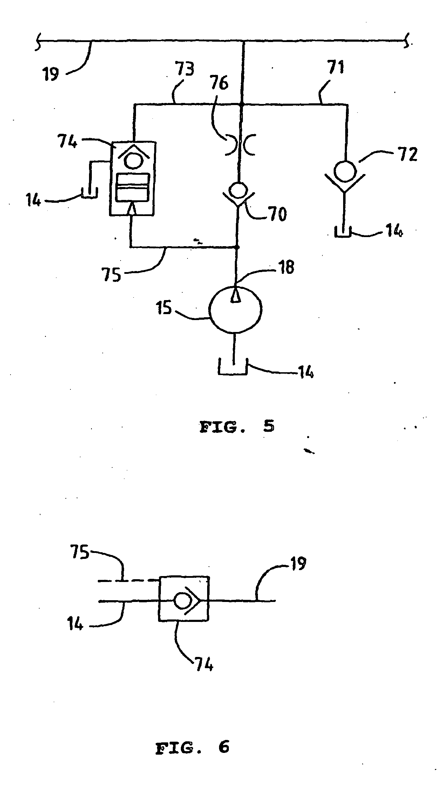

Die Figur 5 kann in Verbindung mit zum Beispiel Figur 3 oder Figur 4 einfach verstanden werden und sieht wie in Figur 4 eine Lösung vor, die in automatischer Weise eine Notbedienungsmöglichkeit schafft. In Figur 5 sind wiederum der Behälter 14 und die Pumpe 15 ersichtlich, sowie die Leitung 19 des Ausströmanschlusses 18 der Pumpe 15 zu einem oder mehreren Aktuatoren der Bedienungseinrichtung für eine Verdeckeinheit eines Fahrzeugs.

In Figur 5 ist weiter ersichtlich, daß in der Leitung 19 ein in Richtung auf den Ausströmanschluß 18 schließendes Rückschlagventil 70 angeordnet is. An die Leitung 19 schließt weiter an der von dem Ausströmanschluß abgewandten Seite des Rückschlagventils 70 eine erste Zweigleitung 71 zu dem Behälter 14 an, in der ein folgendes Rückschlagventil 72, das in Richtung auf den Behälter 14 schließt, angeordnet ist. An die Leitung 19 schließt weiter an der von dem Ausströmanschluß 18 abgewandten Seite eine zweite Zweigleitung 73 zu dem Behälter 14 an, in der ein hydraulisch zu schließendes Rückschlagventil 74 angeordnet ist. Dieses Rückschlagventil 74 hat einen Sitz und einen darauf passenden Ventilkörper, der über eine Steuerdruckleitung 75 hydraulisch gegen den Sitz gedrückt werden kann. Durch eine geeignete Wahl des Oberflächenverhältnisses zwischen dem Durchlaß des Sitzes und der mit Steuerdruck belasteten Steuerdruckoberfläche des Kolbens des Ventils 74 kann erreicht werden, daß das Ventil 74 geschlossen ist, wenn die Pumpe in Betrieb ist. Beim Abschalten der Pumpe 15 fällt der Druck durch Leckage über die Pumpe 15 langsam weg, so daß sich das Ventil 74 allmählich öffnet und die Notbedienung möglich ist. Das Rückschlagventil 70 verhindert ein Schließen des Ventils 74 bei Notbedienung des Verdecks durch den hydralischen Druck in der Leitung 19. Wenn bei der Notbedienung ein Ansaugen hydraulischer Flüssigkeit aus dem Behälter notwendig ist, so kann dies über Ventil 72 erfolgen.

In Figur 5 ist weiter noch eine Öffnung 76 ersichtlich, die eventuell dazu vorgesehen sein kann, um dafür zu sorgen, daß der Kolben des Rückschlagventils 74 einen einigermaßen höheren Druck erhält als die Kugelseite dieses Ventils. Ein Vorteil der Lösung der Figur 5 über jene der Figur 4 besteht darin, daß das Schiebeventil 60 einen Leckverlust mit sich bringen wird, was bei der Lösung mit Kugelsitzventilen in Figur 5 nicht der Fall sein wird.

## Patentansprüche

1. Hydraulische Bedienungseinrichtung für eine Verdeckeinheit (2) eines Fahrzeugs (1) mit einem oder mehreren hydraulisch beweglichen Teilen, darunter ein zwischen einem geschlossenen Stand und einem geöffneten Stand beweglichen Verdeck (5), wobei die Bedienungseinrichtung umfaßt:
- einen oder mehrere hydraulische Aktuatoren (B, C) jeweils zum Bewegen eines Teils der Verdeckeinheit (2), wobei die Aktuatoren doppeltwirkend sind mit je einer ersten Arbeitskammer (b1, c1) und einer zweiten Arbeitskammer (b2, c2),
- eine Pumpe (15) mit einem Ausströmanschluβ (18) und einem Sauganschluß (17),
- einen Behälter (14) für hydraulische Flüssigkeit,
- wobei der Sauganschluß (17) der Pumpe (15) mit dem Behälter (14) verbunden ist, und wobei an den Ausströmanschluß (18) ein Kanal (19) anschließt, der mit den Aktuatoren (B, C) verbunden ist,
und wobei in dem an den Ausströmanschluß (18) anschließenden Kanal (19) eine durch Strömung betätigbare Ventilanordnung (60, 70, 72, 74) angeordnet ist, **dadurch gekennzeichnet daß** die Pumpe eine einzige Pumprichtung hat, daß der Kanal (19) mit den Arbeitskammern (b1, b2, c1, c2) der Aktuatoren (B, C) verbunden ist mittels jeweils einer Leitung, wobei in zumindest In einer dieser Leitungen ein schaltbares Zweipasitionsventil (34, 44) angeordnet ist, das in seinem ersten, unbetätigten Zustand die jeweils dazugehörige Arbeitskammer (b2, c2) mit dem Behälter (14) und in seinem zweiten, betätigten Zustand mit dem Kanal (19) verbindet, und wobei die andere Leistung die jeweilige andere Arbeitskammer (b1, c1) direkt mit dem Kanal (19) verbindet, und daß die Ventilanordnung (60, 70, 72, 74) einen Auslaßanschluß (63) aufweist, der mit dem Behälter (14) zum Flüssigkeitsablaß verbunden ist, wobei die Ventilanordnung (60, 70, 72, 74) in solcher Weise ausgeführt ist, daß beim Vorhandensein eines Flüssigkeitsstroms von dem Aussirömanschluß (18) zu einem oder mehreren der Aktuatoren (B, C) der Auslaßanschluß (63) geschlossen und bei Abwesenheit dieser Strömung geöffnet ist, so daß die Arbeitskammer (b1, c1), die direkt mit dem Kanal (19) in Verbindung stehen über den Auslaßanschluß (63) mit dem Behälter (14) in Verbindung stehen.

2. Einrichtung nach Anspruch 1, wobei die Ventilanordnung (60) einen Schiebekörper (61) mit einer Öffnung aufweist, wobei der Schiebekörper (61) in einer Bohrung in einem Gehause verschieblich ist, wobei an diese Bohrung ein Auslaß (63) zu dem Behälter (14) anschließt, und wobei, wenn die Pumpe (15) in Betrieb ist, die Flüssigkeit durch den Schiebekörper (61) strömt und der Schiebekörper (61) mittels der Antriebskraft gegen die Kraft einer leichten Rückstellfeder (64) über den Auslaß (63) geschoben wird, so daß die Verbindung zum Behälter (14) geschlossen ist, und wobei wenn die Pumpe (15) stillsteht, die Feder (64) den Schiebekörper (61) wieder zurück drückt und die Verbindung zwischen der Leitung (19) und dem Behälter (14) automatisch zustande kommt.

3. Einrichtung nach Anspruch 1, wobei in dem an den Ausströmanschluß (18) anschließenden Kanal (19) ein in Richtung auf den Ausströmanschluß (18) schließendes erstes Rückschlagventil (70) angeordnet ist, und daß an der von dem Ausströmanschluß abgewandten Seite dieses ersten Rückschlagventils (70) der Kanal über eine erste Zweigleitung (71) mit dem Behälter (14) verbunden ist, in dem ein zweites Rückschlagventil (72), das in Richtung auf den Behälter (14) schließt, angeordnet ist, und daß an der von dem Ausströmanschluß (18) abgewandten Seite des ersten Rückschlagventils (70) der Kanal über eine zweite Zweigleitung (73) mit dem Behälter (14) verbunden ist, in dem ein hydraulisch schließendes Rückschlagventil (74) angeordnet ist, das in der von dem Behälter (14) abgewandten Richtung schließt, wenn die Pumpe (15) in Betrieb ist.

4. Hydraulische Bedienungseinrichturig für eine Verdeckeinheit (2) eines Fahrzeugs (1) mit einem oder mehreren hydraulisch beweglichen Teilen, darunter ein zwischen einem geschlossenen Stand und einem geöffneten Stand beweglichen Verdeck (5), wobei die Bedienungseinrichtung umfaßt:
- einen oder mehrere hydraulische Aktuatore (A,B,C), jeweils zum Bewegen eines Teils der Verdeckeinheit,
- eine Pumpe (15) mit einem Auströmanschluß (18) und einem Sauganschluß (17),
- einen Behälter (14) für hydraulische Flüssigkeit,
wobei der Sauganschluß (17) der Pumpe mit dem Behälter (14) verbunden ist, und wobei an den Auströmanschluß (18) ein Kanal anschließt, der mit den Aktuatoren (A, B, C) verbunden ist, wobei in dem an den Ausströmanschluß (18) anschließenden Kanal (19) eine durch Strömung betätigbare Ventilanordnung (70, 72, 74) angeordnet ist, wobei die Ventilanordnung (70, 72, 74) einen Auslaßanschluß aufweist, der mit dem Behälter (14) zum Flüssigkeitsablaß verbunden ist, wobei die Ventilanordnung (70, 72, 74) in solcher Weise ausgeführt ist, daß beim Vorhandensein eines Flüssigkeitsstroms von dem Ausströmanschluß (18) zu einem oder mehreren der Aktuatoren (A, B, C), der Auslaßanschluß geschlossen, und bei Abwesenheit dieser Strömung geöffnet ist, **dadurch gekennzeichnet, daß** in dem an den Ausströmanschluß (18) anschließenden Kanal (19) ein in Richtung auf den Ausströmanschluß (18) schließendes erstes Rückschlagventil (70) angeordnet ist, und daß an der von dem Ausströmanschluß abgewandten Seite dieses ersten Rückschlagventils (70) der Kanal über eine erste Zweigleitung (71) mit dem Behälter (14) verbunden ist, in dem ein zweites Rückschlagventil (72), das in Richtung auf den Behälter (14) schließt, angeordnet ist, und daß an der von dem Ausströmanschluß (18) abgewandten Seite des ersten Rückschlagventils (70) der Kanal über eine zweite Zweigleitung (73) mit dem Behälter (14) verbunden ist, in dem ein hydraulisch schließendes Rückschlagventil (74) angeordnet ist, das in der von dem Behälter (14) abgewandten Richtung schließt, wenn die Pumpe (15) in Betrieb ist.

## Claims

1. Hydraulic actuating device for a top unit (2) of a vehicle (1) with one or more hydraulically moveable part(s), including a top (5) which can move between a closed state and an open state, which actuating device comprises:
- one or more hydraulic actuator(s) (B, C), in each case for moving a part of the top unit (2), wherein the actuators are of the double acting type with each a first working chamber (b1, c1) and a second working chamber (b2, c2),
- a pump (15) with an outflow connection (18) and an intake connection (17),
- a tank (14) for hydraulic fluid,
- wherein the intake connection (17) of the pump (15) is connected to the tank (14), and wherein a duct (19) adjoins the outflow connection (18), which duct is connected to the actuators (B, C), and wherein a valve arrangement (60; 70, 72, 74), which can be actuated by flow, is disposed in the duct (19) which adjoins the outflow connection (18), **characterised in that** the pump has a single pump direction, **in that** the duct (19) is connected to the working chambers (b1, b2, c1, c2) of the actuators (B, C) by means of respective conduits, wherein in at least one of these conduits is arranged a switchable two-position valve (34, 44), which connects the respective corresponding working chamber (b2, c2) in a first, non-operated state with the tank (14), and in a second, operated state with the duct (19), and wherein the other conduit connects directly the respective other working chamber (b1, c1) with the duct (19), and **in that**
the valve arrangement (60; 70, 72, 74) has an outlet connection (63) which is connected to the tank (14) to discharge the fluid, wherein the valve arrangement (60; 70, 72, 74) is constructed in such a way that the outlet connection (63) is closed off when fluid flows from the outflow connection (18) to one or more of the actuator(s) (B, C) and is open in the absence of this flow, such that the working chambers (b1, c1), which are in direct communication with the duct (19) are in communication to the tank via the outlet connection (63).

2. Device according to claim 1, wherein the valve arrangement (60) has a slide body (61) with an opening in the latter, which slide body (61) can be displaced into a bore in a housing, wherein this bore is adjoined by an outlet (63) to the tank (14), and wherein when the pump (15) is operating the fluid flows through the slide body (61) and the slide body (61) is pushed by means of the drive force against the force of a lightweight return spring (64) beyond the outlet (63), so that the connection with the tank (14) is closed off, and wherein when the pump (15) is not operating the spring (64) pushes the slide body (61) back again, and the connection between the line (19) and the tank (14) is automatically established.

3. Device according to claim 1, wherein a first non-return valve (70), which closes in the direction of the outflow connection (18), is disposed in the duct (19) which adjoins the outflow connection (18), and that the duct (19) is connected to the tank (14) via a first branch line (71) on the side of this first non-return valve (70) which is remote from the outflow connection (18), in which branch line a second non-return valve (72), which closes in the direction of the tank (14), is disposed, and that the duct is connected to the tank (14) via a second branch line (73) on the side of the first non-return valve (70) which is remote from the outflow connection (18), in which branch line a hydraulically closing non-return valve (74) is disposed, which valve closes in the direction remote from the tank (14) when the pump (15) is operating.

4. Hydraulic actuating device for a top unit (2) of a vehicle (1) with one or more hydraulically moveable part(s), including a top (5) which can move between a closed state and an open state, which actuating device comprises:
- one or more hydraulic actuator(s) (A, B, C), in each case for moving a part of the top unit (2),
- a pump (15) with an outflow connection (18) and an intake connection (17),
- a tank (14) for hydraulic fluid,
- wherein the intake connection (17) of the pump (15) is connected to the tank (14), and wherein a duct adjoins the outflow connection (18), which duct is connected to the actuators (A, B, C), and wherein a valve arrangement (70, 72, 74), which can be actuated by flow, is disposed in the duct (19) which adjoins the outflow connection (18), wherein the valve arrangement (70, 72, 74) has an outlet connection which is connected to the tank (14) to discharge the fluid, wherein the valve arrangement (70, 72, 74) is constructed in such a way that the outlet connection is closed off when fluid flows from the outflow connection (18) to one or more of the actuator(s) (A, B, C) and is open in the absence of this flow, **characterised in that** a first non-return valve (70), which closes in the direction of the outflow connection (18), is disposed in the duct (19) which adjoins the outflow connection (18), and **in that** the duct (19) is connected to the tank (14) via a first branch line (71) on the side of this first non-return valve (70) which is remote from the outflow connection (18), in which branch line a second non-return valve (72), which closes in the direction of the tank (14), is disposed, and **in that** the duct is connected to the tank (14) via a second branch line (73) on the side of the first non-return valve (70) which is remote from the outflow connection (18), in which branch line a hydraulically closing non-return valve (74) is disposed, which valve closes in the direction remote from the tank (14) when the pump (15) is operating.

## Revendications

1. Dispositif de commande hydraulique pour un système de capote (2) d'un véhicule (1), comportant une ou plusieurs parties mobiles par voie hydraulique, dont une capote (5) mobile entre une position fermée et une position ouverte, le dispositif de commande comprenant :
- un ou plusieurs actionneurs hydrauliques (B, C), respectivement pour le déplacement d'une partie du système de capote (2), les actionneurs étant à double effet et dotés chacun d'une première chambre de travail (b1, c1) et d'une seconde chambre de travail (b2, c2),
- une pompe (15) avec un raccord de refoulement (18) et un raccord d'aspiration (17),
- un récipient (14) pour du liquide hydraulique,
- le raccord d'aspiration (17) de la pompe (15) étant relié au récipient (14), et un canal (19) relié aux actionneurs (B, C) se raccordant au raccord de refoulement (18),
et un agencement de vannes (60, 70, 72, 74) pouvant être actionné par écoulement étant disposé dans le canal (19) se raccordant au raccord de refoulement (18), **caractérisé en ce que** la pompe a un seul sens de pompage, **en ce que** le canal (19) est relié à chacune des chambres de travail (b1, b2, c1, c2) des actionneurs (B, C) au moyen d'une conduite, une vanne à deux positions (34, 44) commutable étant disposée dans au moins l'une de ces conduites, laquelle vanne relie la chambre de travail (b2, c2) spécifique au récipient (14) et au canal (19) lorsqu'elle est respectivement dans son premier état non actionné et dans son second état actionné, et l'autre conduite reliant l'autre chambre de travail (b1, c1) respective directement au canal (19), et **en ce que** l'agencement de vannes (60, 70, 72, 74) comporte un raccord d'évacuation (63) qui est relié au récipient (14) pour l'évacuation de liquide, l'agencement de vannes (60, 70, 72, 74) étant réalisé de telle sorte que le raccord d'évacuation (63) soit fermé lors de la présence d'un écoulement de liquide du raccord de refoulement (18) vers ou un plusieurs des actionneurs (B, C), et ouvert en l'absence de cet écoulement, de sorte que les chambres de travail (b1, c1), qui sont en liaison directement avec le canal (19), soient en liaison par le raccord d'évacuation (63) au récipient (14).

2. Dispositif selon la revendication 1, l'agencement de vannes (60) comportant un corps coulissant (61) avec un orifice, lequel corps coulissant (61) est mobile dans un alésage d'un boîtier, une évacuation (63) vers le récipient (14) se raccordant à cet alésage, le liquide traversant le corps coulissant (61), et le corps coulissant (61) étant repoussé au-dessus de l'évacuation (63) au moyen de la force d'entraînement en s'opposant à la force d'un léger ressort de rappel (64) lorsque la pompe (15) fonctionne, afin que la liaison vers le récipient (14) soit fermée, et le ressort (64) repoussant à nouveau le corps coulissant (61) lorsque la pompe (15) est à l'arrêt, ce qui rétablit automatiquement la liaison entre la conduite (19) et le récipient (14).

3. Dispositif selon la revendication 1, dans lequel un premier clapet antiretour (70), qui ferme en direction du raccord de refoulement (18), est disposé dans le canal (19) se raccordant au raccord de refoulement (18), du côté opposé au raccord de refoulement de ce premier clapet antiretour (70), le canal (19) est relié au récipient (14) par l'intermédiaire d'une première conduite de dérivation (71), où est disposé un deuxième clapet antiretour (72) qui ferme en direction du récipient (14) et, du côté opposé au raccord de refoulement (18) du premier clapet antiretour (70), le canal est relié au récipient (14) par l'intermédiaire d'une deuxième conduite de dérivation (73), où est disposé un clapet antiretour (74) se fermant par voie hydraulique, qui ferme dans la direction opposée au récipient (14) lorsque la pompe (15) est en fonctionnement.

4. Dispositif de commande hydraulique pour un système de capote (2) d'un véhicule (1) comportant une ou plusieurs parties mobiles par voie hydraulique, dont une capote (5) mobile entre une position fermée et une position ouverte, lequel dispositif de commande comprend :
- un ou plusieurs actionneurs hydrauliques (A, B, C) respectivement pour le déplacement d'une partie du système de capote,
- une pompe (15) avec un raccord de refoulement (18) et un raccord d'aspiration (17),
- un récipient (14) pour du liquide hydraulique,
le raccord d'aspiration (17) de la pompe étant relié au récipient (14), et un canal relié aux actionneurs (A, B,C) se raccordant au raccord de refoulement (18), un agencement de vannes (70, 72, 74) pouvant être actionné par écoulement étant disposé dans le canal (19) se raccordant au raccord de refoulement (18), l'agencement de vannes (70, 72, 74) comportant un raccord d'évacuation qui est relié au récipient (14) pour l'évacuation du liquide, l'agencement de vannes (70, 72, 74) étant réalisé de telle sorte que le raccord d'évacuation soit fermé lors de la présence d'un écoulement de liquide du raccord de refoulement (18) vers un ou plusieurs des actionneurs (A, B, C), et ouvert en l'absence de cet écoulement, **caractérisé en ce qu'**un premier clapet antiretour (70), qui ferme en direction du raccord de refoulement (18), est disposé dans le canal (19) se raccordant au raccord de refoulement (18), et **en ce que**, du côté opposé au raccord de refoulement de ce premier clapet antiretour (70), le canal est relié au récipient (14) par l'intermédiaire d'une première conduite de dérivation (71), où est disposé un deuxième clapet antiretour (72) qui ferme en direction du récipient (14), et **en ce que**, du côté opposé au raccord de refoulement (18) du premier clapet antiretour (70), le canal est relié au récipient (14) par l'intermédiaire d'une deuxième conduite de dérivation (73), où est disposé un clapet antiretour (74) se fermant par voie hydraulique, qui ferme dans la direction opposée au récipient (14) lorsque la pompe (15) est en fonctionnement.
